# EUROPÄISCHE PATENTSCHRIFT

(11) **EP 0 877 466 B1**
(45) Veröffentlichungstag und Bekanntmachung des Hinweises auf die Patenterteilung: **14.08.2002**
(21) Anmeldenummer: 98105468.7
(22) Anmeldetag: 26.03.1998
(51) Int. Cl.: H02K 41/03

(54) **Antriebsmittel für eine Linearbewegung insbesondere kontinuierliche Linearbewegung und Langstator-Linearmotor**
Driving means for a linear movement, in particular a continuous linear movement and linear motor with long-stator
Moyen d'entraînement pour un mouvement linéaire, en particulier un mouvement linéaire continu et moteur linéaire à stator long

(30) Priorität: 06.05.1997 DE 19718840
(43) Veröffentlichungstag der Anmeldung: 11.11.1998
(73) Patentinhaber: Voith Turbo GmbH & Co. KG, 89522 Heidenheim (DE)
(72) Erfinder: Lange, Andreas, 89551 Zang (DE); Koll, Stefan, 89522 Heidenheim (DE)
(74) Vertreter: Dr. Weitzel & Partner

(56) Entgegenhaltungen:
- WO-A-90/07219
- DE-A- 3 705 089
- DE-A- 3 927 453
- DE-A- 4 300 440
- DE-A- 4 333 555
- GB-A- 2 300 312

## Beschreibung

Die Erfindung betrifft ein Antriebsmittel für Linearbewegung, insbesondere eine kontinuierliche Linearbewegung und einen Langstator-Linearmotor in Form einer Linear-Langstator-Transversalflußmaschine, im einzelnen mit den Merkmalen aus dem Oberbegriff des Anspruchs 1.

Langstator-Linearmotoren sind in verschiedenen Ausführungen beispielsweise aus den folgenden Druckschriften bekannt:
1. "Wie funktioniert das?", Meyer's Lexikonverlag, Seite 368-369
2. Prospekt der Fa. Magnetbahn GmbH MB.7.1/0588

In der Druckschrift 1 ist der grundlegende Aufbau eines Linearmotors wiedergegeben. Das physikalische Prinzip des Linearmotors, ist das gleiche wie das eines rotierenden Elektromotors. Dieser ist lediglich sozusagen aufgeschnitten und in eine Linie gelegt. Ein Linearmotor weist ein Primärteil, welches vom Stator gebildet wird, und ein Sekundärteil auf. Ist das Primärteil des Motors, d.h. der Stator, im Fahrzeug und das Sekundärteil, d.h. die Reaktionsschiene in der Fahrbahn angeordnet, spricht man von einem Kurzstatormotor, bei umgekehrter Anordnung von einem Langstatormotor. Die Grundtypen der Linearmotoren können wie beim Rotationsmotor als Synchron- oder Asynchronmotoren in einseitiger und zweiseitiger Bauweise ausgeführt werden. Die Stromzuführung zum Fahrzeug ist problematisch, weil sie für sehr hohe Geschwindigkeiten ausgelegt sein muß. Kontaktbehaftete Stromübertragungseinrichtungen zum Fahrzeug können jedoch bei Anwendung eines synchronen Langstatorantriebs vermieden werden. Dieses Prinzip wurde bei dem deutschen Transrapidkonzept in der Versuchsanlage im Emsiand realisiert. Das Trag- und Führsystem arbeitet nach dem Prinzip des elektromagnetischen Schwebens (EMS). Es beruht auf den anziehenden Kräften der im Fahrzeug angeordneten, einzeln geregelten Elektromagneten und den an der Unterseite des Fahrwegs angebrachten ferromagnetischen Reaktionsschienen, den Statorpaketen. Dabei ziehen die Tragmagnete das Fahrzeug von unten an den Fahrweg heran, die Führmagnete halten es seitlich in der Spur. Ein elektronisches, hochzuverlässiges Regelsystem stellt sicher, daß das Fahrzeug in einem stets gleichbleibenden Abstand von 10 mm an seinem Fahrweg schwebt. Als Antrieb und zugleich Bremse dient der Magnetschnellbahn ein synchroner Langstator-Linearmotor, der ebenfalls berührungsfrei arbeitet. Die Funktion dieses Antriebssystems läßt sich aus der Wirkungsweise eines rotierenden Elektromotors ableiten, dessen Stator aufgeschnitten und gestreckt wird. Er erzeugt anstelle eines magnetischen Drehfeldes ein magnetisches Wanderfeld.

Im Gegensatz zum klassischen Antriebskonzept konventioneller Verkehrssysteme, bei denen der Antriebsmotor am Fahrzeug eingebaut ist, sind bei der Magnetschnellbahn ferromagnetische Statorpakete mit einer dreiphasigen Wanderfeldwicklung als primärer Antriebsteil im Fahrweg installiert. Das Fahrzeug wird dadurch leichter und technisch einfacher. In den Wicklungen im Fahrweg wird ein elektromagnetisches Wanderfeld erzeugt, von dem das Fahrzeug durch seine als Erregerteil wirkenden Tragmagnete mitgezogen wird. Diese Schubkraft läßt sich mit Hilfe von Umrichtern durch Verändern von Stärke und Frequenz des Drehstromes vom Stillstand bis zur Betriebsgeschwindigkeit stufenlos einstellen. Wird die Schubrichtung durch Umpolung des Magnetfeldes umgedreht, wird aus dem Antrieb die ebenfalls berührungsfreie Bremse der Magnetschnellbahn.

Auch die Energieversorgung für das Trag- und Führsystem und die Einrichtungen an Bord des Transrapid erfolgt berührungslos über Linearmotoren in den Tragmagneten. Die Magnetschnellbahn benötigt daher weder Stromabnehmer noch Oberleitungen.

Zur Vermeidung von Energieverlusten ist der Langstator am Fahrweg in Einzelabschnitte unterteilt, von denen immer nur derjenige eingeschaltet wird, in dem sich das Fahrzeug gerade befindet. Abschnitte mit hohen Schubanforderungen wie Steigungen und Gefälle oder Beschleunigungsstrecken lassen sich diskret auslegen. Dies bedeutet, daß anders als bei herkömmlichen Verkehrsmitteln, bei denen das Fahrzeug stets die Motorleistung für die jeweils höchste Beanspruchung mit sich führen muß, beim Transrapid die Leistung des Langstator-Linearmotors im Fahrweg so ausgelegt ist, daß sie jeweils immer nur der tatsächlichen Notwendigkeit entspricht.

Die Druckschrift 2 gibt eine Zusammenfassung über die Ausführung einer Referenzstrecke mit Magnetbahntechnik, bei welcher die Fahrzeuge und der Fahrweg, der Langstatorantrieb und das Automatisierungssystem bereits weiterentwickelt wurden. In den Fahrwegträger ist beidseitig ein geblechter Langstator eingebettet, der eine Drehstromwicklung trägt und das magnetische Wanderfeld führt. Das Fahrzeug wird von Permanentmagneten getragen, die sich unter dem Langstator befinden, über den Luftspalt mit dem Wanderfeld in Wechselwirkung stehen und sich mit diesem synchron bewegen. Die vertikalen und horizontalen Führungsrollen, welche keine tragenden Funktionen haben, dienen der Spurführung sowie zur Abstandshaltung der Magnete. Die gewichtsabhängige Steuerung des Luftspaltes erfolgt durch eine Hebelübersetzung zwischen Wagenkastenfederung und dem Magnetträger. Der aktive, d.h. der primäre Teil des Antriebes bei einem Langstatorsystem befindet sich im Fahrweg. Dieser wird abschnittsweise mit Drehstrom variabler Frequenz und Spannung versorgt.

Die elektrische Auslegung der Antriebselemente, d.h. der Langstatorabschnitte, wird den jeweiligen durch die Streckentopologie und fahrdynamische Sollwerte gegebenen Erfordernissen angepaßt. So verstärkt man die Bewicklung und damit den Strombelag in Beschleunigungs-, Brems-, Steigungs- und Gefälleabschnitten je nach benötigter Schubkraft. Die Installation für hohe Leistung ist somit nur an den Stellen notwendig, wo sie betrieblich gebraucht wird. Die Versorgung der Langstatorabschnitte mit Drehstromantriebsleistung geschieht abschnittsweise durch Pulswechselrichter. Diese werden über einen Zwischenkreis mit eingeprägter Gleichspannung von einem gesteuerten Gleichrichter mit Stromrichtertrafo aus einem Mittelspannungsnetz gespeist. Transformator, Gleichrichter, Pulswechselrichter sowie die Auswahlschalter werden neben dem Fahrweg am Streckenanfang fest installiert. Da der Antrieb analog einem Stromrichter gesteuerten Synchronmotor arbeitet, müssen die Pulswechselrichter ähnlich wie dort in der Phase entsprechend der Pollage der Fahrzeuge und im Strom entsprechend dem verlangten Schub gesteuert werden. Diese Funktion übernimmt für jeden im Einsatz befindlichen Umrichter je eine digital arbeitende Motorsteuerung. Diese erfaßt die exakte Pollage über die Auswertung der Signale eines Pollagensenders. Jedes Fahrzeug ist mit einem derartigen Sender ausgestattet. Die Phasenlage des Wanderfeldes läßt sich nun der Pollage für Motor- und Bremsbetrieb stets optimal zuordnen. Eingangsgrößen für die Motorsteuerung sind die Soll- und Istwerte der Fahrzeuggeschwindigkeit; letztere wird so nach vorgegebenen Sollwerten über den Schub geregelt.

Diese bekannten Langstator-Linearmotoren basieren üblicherweise auf Mehrphasen-Synchronmaschinen klassischer Bauart. Der Fahrweg selbst enthält genutete Blechpakete mit eingelegter Mehrphasenwicklung, in der Regel drei Phasen, während im Fahrzeug ebenfalls Blechpakete mit Erregerwicklung angebracht sind.

Da jedoch nur ein verschwindend geringer Anteil des Fahrweges durch das Fahrzeug bedeckt wird, ist die magnetische Streuung der Statorwicklung entscheidend für eine Auslegung des speisenden Umrichters. Nutung und große Eisenfläche führen bei bekannten Ausführungen zu ungünstigen Streuverhältnissen des unbedeckten Fahrwegs. Daraus folgt ein großer Bedarf an Umrichterscheinleistung. Die mehrphasige Statorwicklung erfordert große Kupfermassen bei aufwendiger mäanderförmiger Verlegung. Eine dauerhafte Befestigung der Wicklung ist zudem sehr aufwendig. Bei Stromausfall ist eine elektrische Bremsung des Fahrzeuges nicht möglich, so daß man auch bei hohen Geschwindigkeiten auf die mechanische Bremse zurückgreifen muß.

Der Erfindung liegt daher die Aufgabe zugrunde, ein Antriebsmittel zur Linearbewegung, insbesondere kontinuierlichen Linearbewegung zu entwickeln, bei welchem die genannten Nachteile vermieden werden und das mit einem einfach herzustellenden, mit wenig Kupfer darstellbaren und niederinduktivem Fahrweg auskommt. Ferner soll ein Notbetrieb bei Stromausfall möglich sein. Da eine Feldschwächung bei einem Fahrmotor von Vorteil ist, ist diese auch bei einer neuen Lösung obligatorisch. Die Permanenterregung soll einen guten Wirkungsgrad ermöglichen.

Die erfindungsgemäße Lösung ist durch die Merkmale des Anspruchs 1 charakterisiert. Vorteilhafte Ausführungen sind in den Unteransprüchen wiedergegeben.

Ein Antriebsmittel für eine Linearbewegung, insbesondere für eine kontinuierliche Liniearbewegung, insbesondere ein Langstator-Linearmotor umfaßt einen Primärteil und einen Sekundärteil. Der Primärteil umfaßt wenigstens einen Stator. Der Sekundärteil, welcher auch als Läufer bezeichnet wird, umfaßt wenigstens zwei Läuferteile, welche jeweils aus hintereinander angeordneten wechselweise magnetisierten Magnetanordnungen und dazwischen angeordneten Elementen aus weichmagnetischem Material, insbesondere Weicheisenelementen, bestehen. Erfindungsgemäß ist dem Stator wenigstens eine Wicklung zugeordnet, die sich im wesentlichen über die gesamte Länge des Fahrweges erstreckt und als Fahrwegsschleife vorliegt. Der Stator umfaßt eine Vielzahl von Statorelementen, welche wechselweise beidseitig der Wicklung zueinander versetzt angeordnet sind. Die beiden Läuferteile des Sekundärteils sind dabei der Wicklung an den vom Stator freien Bereich der Wicklung jeweils in einem bestimmten Abstand zu dieser zugeordnet, wobei jeweils einander entgegengesetzt magnetisierte Magnetanordnungen der beiden Läuferteile sich wenigstens zum Teil einander gegenüberliegen.

Vorzugsweise ist eine einzige, dem Stator zugeordnete Wicklung vorgesehen, welche sich im Wesentlichen über die gesamte Länge des Fahrweges erstreckt.

Die Magnetanordnungen des Sekundärteiles umfassen vorzugsweise wenigstens jeweils einen Permanentmagneten. Die Permanentmagnete sind mit jeweils alternierender Polarität angeordnet. Eine weitere Möglichkeit besteht darin, anstatt der Permanentmagnete elektrische Magnete zu verwenden, wobei jedoch am zu bewegenden Element zusätzliche Wicklungen vorzusehen sind. Vorzugsweise besteht der Sekundärteil aus Permanentmagneten und geblechten Weicheisenelementen, welche zum Fahrweg durch einen Luftspalt beabstandet sind.

Der Sekundärteil besteht aus P-Magneten und geblechten Weicheisenelementen, welche zum Fahrweg durch den Luftspalt beabstandet sind. Dies bedeutet, daß der Fahrweg im wesentlichen aus einer in Bewegungsrichtung verlaufenden Wicklung, vorzugsweise in Form eines isolierten Kupferstranges, mit schwellenartig zueinander versetzt und abwechselnd ober- bzw. unterhalb dem Kupferstrang angeordneten Statorelementen in Form von Blechpaketen, besteht. Die Statorelemente, insbesondere die Blechpakete, werden z. B. mittels Befestigungselementen, beispielsweise mittels Bolzen, am Fahrwegträger befestigt, während der Kupferstrang durch die Blechpakete niedergehalten wird.

Die Statorelemente, die Wicklung und die Läuferteile sind dabei vorzugsweise derart angeordnet, daß zwischen diesen jeweils ein Luftspalt gebildet wird.

Die den Fahrweg mitbeschreibenden einzelnen Statorelemente sind jeweils vorzugsweise aus einer Vielzahl von hintereinandergeschichteten Blechelementen, insbesondere Blechpaketen aufgebaut. Diese weisen in einer Ansicht auf einen Schnitt durch die Wicklung vorzugsweise einen rechteckigen Querschnitt auf.

Die einzelnen Weicheisenelemente des Sekundärteiles sind vorzugsweise in Form von Schnittbandkemen ausgeführt. Die Geometrie eines einzelnen Weicheisenelementes ist dabei derart ausgeführt, daß eine Leitung des magnetischen Flusses über die Weicheisenelemente zwischen einzelnen Statorelementen erfolgen kann. Die einzelnen Weicheisenelemente der Läuferteile sind daher im wesentlichen u-förmig ausgeführt, wobei die Schenkel in Richtung der einzelnen Statorelemente in Einbaulage ausgerichtet sind. Gegenüber den konventionellen Rotations- Transversalflußmaschinen, welche sich durch einen einfach aufgebauten Rotor von einfach gestalteten hintereinander angeordneten Weicheisenelementen mit dazwischen liegenden Magneten und einen komplizierten Statoraufbau mit in Form von Schnittbandkernen ausgeführten Statorelementen auszeichnen, wird bei der erfindungsgemäßen Lösung das Primärteil, welches sich über die Länge des Fahrweges erstreckt, sehr einfach aufgebaut und der an dem zu bewegenden Element angebrachte Sekundärteil, welcher wesentlich kürzer als der Primärteil ist, komplizierter gestaltet. Einfacher ausgedrückt, bei der erfindungsgemäßen Lösung sind die Gestaltungsmöglichkeiten der Weicheisenelemente mit denen der Statorelemente gegenüber den konventionellen bekannten Rotations- Transversalflußmaschinen vertauscht.

Ein derartig erfindungsgemäß aufgebauter Langstator-Linearmotor zeichnet sich durch einen sehr einfach aufgebauten Fahrweg, eine geringe Streuinduktivität des Langstators sowie eine geringe Wicklungsmasse aus.

Des weiteren ist eine niedrige Scheinleistung des Umrichters, welcher zur Speisung des Langstators dient, erforderlich. Durch die geringen Eisen- und Kupfermassen wird ein guter Antriebswirkungsgrad erzielt. Die erfindungsgemäße Lösung läßt sich für Antriebskonzepte in verschiedenen Einsatzgebieten verwenden. Denkbar ist neben dem Einsatz für Schienenfahrzeuge auch der Einsatz in Aufzügen. Bei letztgenanntem Anwendungsfall entfallen Seile, Zuleitungen und das Gegengewicht, und zudem brauchen keine Antriebseinrichtungen im Dach des Gebäudes eingebaut werden.

Vorzugsweise sind die Statorelemente in Einbaulage am Fahrweg ober- und unterhalb der Wicklung angeordnet. Es besteht jedoch auch die Möglichkeit, bei entsprechender Befestigung der Wicklung diese und die Statorelemente in Einbaulage senkrecht anzuordnen. Im Prinzip ist jede Einbaulage denkbar. Wesentlich ist jedoch, daß in einer Ansicht im Schnitt durch die Wicklung die Statorelemente beidseitig der Wicklung bei Projizierung in eine Ebene einander gegenüberliegend angeordnet sind, und den beiden verbleibenden, von den Statorelementen freien Seiten der Wicklung die Läuferteile des Sekundärteiles zugeordnet sind. Letztere weisen einen wenigstens geringen Abstand gegenüber dem Primärteil auf. Statorelemente und Läuferteile umschließen somit die Wicklung. Ihre Lage kann durch die Seiten eines Rechteckes oder Quadrates beschrieben werden. Geringfügige Lageabweichungen sind ebenfalls denkbar.

Zur Realisierung der Funktion, dem Erzeugen einer insbesondere kontinuierlichen Linearbewegung sind die beiden Läuferteile derart zueinander angeordnet, daß im wesentlichen jeweils die Weicheisenelemente und einander entgegengesetzt polarisierte Magnetanordnungen der beiden Läuferteile gegenüberliegen. Durch das durch die Magnetanordnungen erzeugte Magnetfeld und dem damit vorhandenen magnetischen Fluß in Wechselwirkung mit der stromdurchflossenen Wicklung (Wechselstrom), welche eine Änderung des magnetischen Flusses bewirkt, wird eine Kraft erzeugt, welche zur Verschiebung des Sekundärteiles gegenüber dem Primärteil führt.

Das Sekundärteil kann als bauliche Einheit ausgeführt sein, d.h. beide Läuferteile sind auch im unmontierten Zustand miteinander mechanisch gekoppelt. Denkbar ist jedoch auch, die genaue Lagezuordnung beider Läuferteile zueinander erst mit dem Ein- bzw. Anbau in bzw. an das anzutreibende Element, beispielsweise den Fahrkorb eines Liftes oder Aufzuges oder an das Fahrwerk eines Fahrzeuges vorzunehmen.

Der Fahrweg selbst liegt vorzugweise als Fahrwegschleife vor, d.h. er weist einen Hin- und Rückleiter auf. Die Wicklung ist geschlossen.

Die erfindungsgemäße Lösung ermöglicht es des weiteren, durch zusätzliche Einrichtungen Möglichkeiten der elektrischen Bremsung bei Umrichter- oder Stromausfall vorzusehen. Dazu wird wenigstens einer Magnetanordnung einer der beiden Läuferteile eine weitere Wicklung zugeordnet, welche mit einem Stromkreis derart koppelbar ist, daß bei Nichtunterbrechung des Stromkreises bzw. der Koppelung mit dem Stromkreis eine Änderung des magnetischen Flusses in Richtung einer Abschwächung bewirkt wird. Da die Erregung durch Permanentmagnete eingeprägt ist, kann beispielsweise mit einer im Fahrzeug untergebrachten Brems- oder Hilfswicklung über Widerstände abgebremst werden.

Die erfindungsgemäße Lösung in Form eines einphasigen Linear-Langstatormotors, insbesondere einer einphasigen Linear-Langstator-Transversalflußmaschine zeichnet sich daher neben einem einfachen Aufbau auch durch eine optimale Realisierbarkeit von Zusatzfunktionen aus. Durch Kombination zweier einphasiger Linearmotoren kann ein gleichmäßiges Drehmoment erzeugt werden.

Da bei Erzeugung einer Antriebskraft bei einer derartigen einphasigen Linear-Langstator-Transversalflußmaschine bei bestimmten Stellungen der einzelnen Sekundärteile bzw. der beiden Läuferteile gegenüber dem Primärteil kein Vorschubmoment erzeugt wird (dies ist immer dann der Fall, wenn die Weicheisenelemente der einzelnen Läuferteile gegenüber dem Primärteil eine Lage einnehmen, bei welcher diese sich im Zwischenraum zwischen zwei hintereinander angeordneten Statorelementen befinden), ist es für Ausführungsbeispiele, bei denen die Anfahrbewegung des anzutreibenden Elementes ohne Relativbewegung zwischen dem Primär- und dem Sekundärteil erfolgen muß, für die Erzeugung einer kontinuierlichen Vortriebskraft für das eindeutige Anfahren in eine Richtung, erforderlich, zwei Maschinenphasen vorzusehen. Dies kann durch Kombination zweier erfindungsgemäß gestalteter einphasiger Linearmotoren realisiert werden.

Wirkt jedoch auf das Fahrzeug kontinuierlich eine Kraft ein oder wirkt eine Kraft gegen die Bewegungsrichtung, bspw. Schwerkraft beim Anwendungsfall der Bewegung eines Fahrkorbes in einem Aufzug, ist das kontrollierte Anfahren auch mit einer Maschinenphase ohne weitere Hilfseinrichtungen möglich. In diesem Fall bewirkt die Schwerkraft bei Auslösen des Anfahrvorganges eine Bewegung des Fahrkorbes und damit auch des Läuferteiles entgegen der Schwerkraft. Dabei werden die einzelnen Weicheisenelemente der Läuferteile in eine Position gegenüber dem Primärteil verbracht, bei welcher eine Kraft entgegen der Schwerkraft erzeugt wird. Diese bewirkt eine Relativbewegung des Sekundärteiles gegenüber dem Primärteil entgegen der Schwerkraft.

Die erfindungsgemäße Lösung ist nachfolgend anhand von Figuren erläutert. Im einzelnen ist darin folgendes dargestellt:
Figuren 1a bis 1c zeigen den Aufbau einer erfindungsgemäß gestalteten Linear-Langstator-Transversalflußmaschine in drei Ansichten;
Figur 2 zeigt die Ausbildung einer Fahrwegschleife mit Hin- und Rückleiter;
Figur 3 verdeutlicht einen erfindungsgemäß gestalteten Linear-Langstator-Transversalflußmaschine mit Hilfswicklung in zwei Ansichten;
Figur 4 verdeutlicht die Möglichkeit der Ausbildung eines elektrischen Stromkreises zur Realisierung elektrischer Bremsvorgänge.

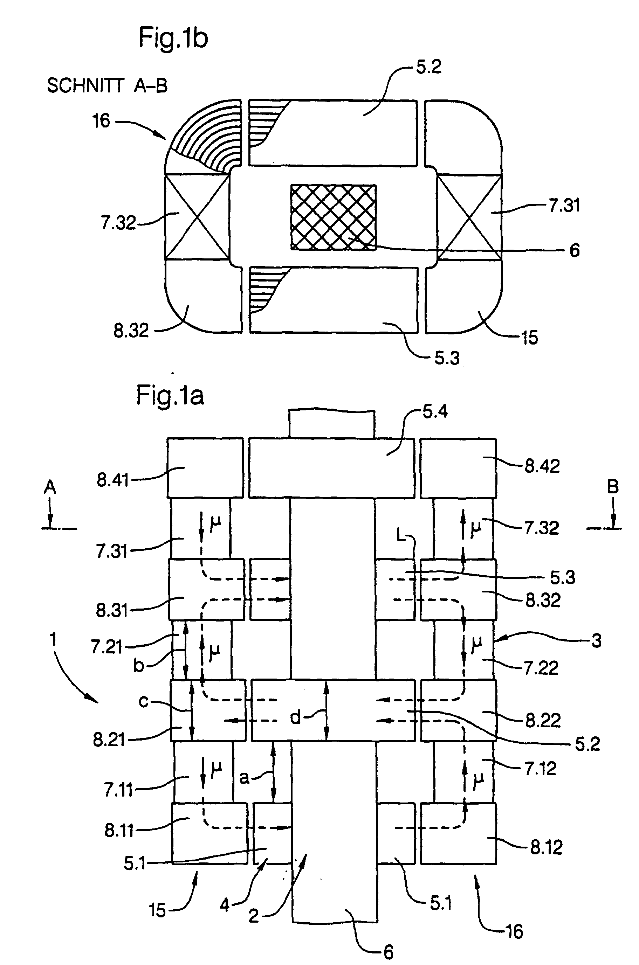

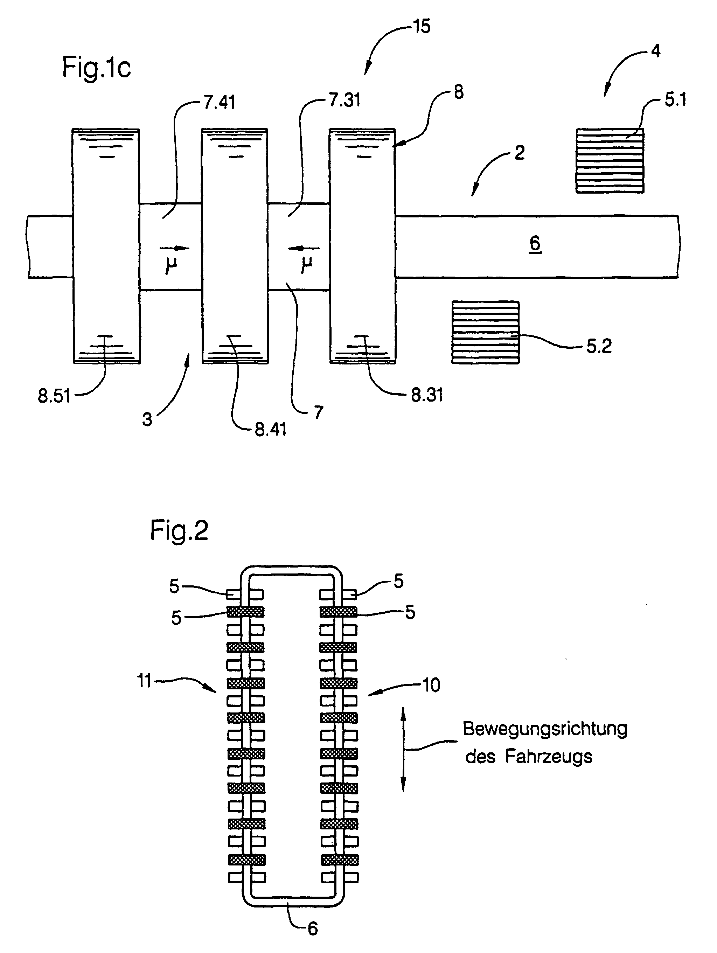

In der Figur 1 ist ein erfindungsgemäß ausgeführtes Antriebsmittel für kontinuierliche Linearbewegung, insbesondere ein Langstator-Linearmotor in Form einer Langstator-Linear-Transversalflußmaschine 1, in zwei Ansichten, dargestellt. Die Figur 1a verdeutlicht dabei eine bevorzugte Ausführung in einer Ansicht von oben in Einbaulage.

Die Langstator-Linear-Transversalflußmaschine 1 umfaßt einen Primärteil 2 und einen Sekundärteil 3. Der Primärteil 2 weist einen Stator 4 auf, welcher eine Vielzahl von Statorelementen 5.1 bis 5.n umfaßt, und wenigstens eine Wicklung 6, die sich wenigstens über die gesamte Länge des Fahrweges erstreckt. Die Statorelemente 5.1 bis 5.n sind dabei wechselweise beidseitig der Wicklung 6 zueinander versetzt angeordnet. Darunter ist zu verstehen, daß in Einbaulage, bezogen auf die axiale Erstreckung der Wicklung 6 die Statorelemente 5.1 bis 5.n nebeneinander und abwechselnd unter- bzw. oberhalb der Wicklung 6 angeordnet sind. Vorzugsweise sind die einzelnen über und unterhalb der Wicklung 6 angeordneten Statorelemente 5.1 bis 5.n jeweils um eine Polteilung zueinander versetzt. Im dargestellten Fall befinden sich dabei beispielsweise die Statorelemente 5.1 und 5.3 unterhalb der Wicklung 6 und die Statorelemente 5.2 und 5.4 oberhalb der Wicklung 6 in Einbaulage. Die in axialer Richtung nebeneinander liegenden Statorelemente 5.1 und 5.2 sind wenigstens versetzt zueinander, d.h. in der Ansicht von oben ohne gemeinsame Überdeckung, angeordnet. Der Abstand a, welcher in der Ansicht von oben lediglich den Abstand in axialer Richtung zwischen zwei einander benachbarten Statorelementen, hier der Statorelemente 5.1 und 5.2, beschreibt, entspricht vorzugsweise der Abmessung in axialer Richtung der einzelnen Magnetanordnungen 7.1 bis 7.n des Sekundärteiles 3. Das Sekundärteil 3 umfaßt zwei beidseitig des Primärteiles 2 angeordnete Läuferteile 15 und 16. Jedes der beiden Läuferteile 15 und 16 umfaßt eine Vielzahl von hintereinander angeordneten, wechselweise bzw. alternierend magnetiserenden Magnetanordnungen 7.1 bis 7.n mit dazwischen angeordneten Weicheisenelementen 8.1 bis 8.n. Dabei sind die Magnetanordnungen und die Weicheisenelemente des ersten Läuferteiles 15 mit 7.11 bis 7.n1 und 8.11 bis 8.n1 sowie die Magnetanordnungen und Weicheisenelemente des zweiten Läuferteiles 16 mit 7.12 bis 7.n2 und 8.12 bis 8.n2 bezeichnet. Die beiden Läuferteile 15 und 16 sind derart zueinander angeordnet, daß jeweils die Magnetanodnungen 7.11 - 7.n1 bzw. 7.12 bis 7.n2 und die Weicheisenelemente 8.11 bis 8.n1 und 8.12 bis 8.n2 einander gegenüberliegen, d.h. daß diese jeweils gegenüber dem Primärteil 2 die gleiche Lage einnehmen. Die Magnetanordnungen 7.1 bis 7.n umfassen vorzugsweise wenigstens jeweils wenigstens einen Permanentmagneten. Ausführungen mit geteiltem Permanentmagneten sind ebenfalls denkbar. Aus konstruktiven Gründen weisen die Permanentmagenten vorzugsweise eine wenigstens rechteckige Form auf.

Die Magnetanordnungen 7.11 bis 7.1n bzw. 7.12 bis 7.2n und die Weicheisenelemente 8.11 bis 8.1n bzw. 8.12 bis 8.2n sind in axialer Richtung wechselweise hintereinander angeordnet. Die Abmessungen der Magnetanordnungen in axialer Richtung b entsprechen dabei vorzugsweise den Abmessungen a zwischen zwei einander benachbarten Statorelementen 5.n und 5.n+1. Die Abmessungen c der Weicheisenelemente 8.11 bis 8.n1 bzw. 8.12 bis 8.n2 in axialer Richtung entsprechen vorzugsweise den Abmessungen d der Statorelemente 5.n in axialer Richtung, d.h. der Breite der Statorelemente 5.

Jeweils die einander benachbarten Magnetanordnungen 7.11 bis 7.n1 bzw. 7.12 bis 7.n2 in axialer Richtung sind in dieser betrachtet wechselweise zueinander magnetisiert. Die einander gegenüberliegenden Magnetanordnungen der beiden Läuferteile 15 und 16 weisen ebenfalls eine einander entgegengesetzt gerichtete Magnetisierung auf.

Der durch die Magnetanordnungen erzeugte magnetische Fluß bewirkt in Wechselwirkung mit dem durch die Wicklung 6 geschickten Strom eine Kraft, welche in einer Verschiebung des Sekundärteiles 3 gegenüber dem Primärteil 2 resultiert. Dabei tritt in der dargestellten Stellung beispielsweise der von der Magnetanordnung 7.12 erzeugte Fluß in der Richtung vom Süd zum Nordpol in Längsrichtung durch die Magnete hindurch und in den Weicheisenbereich, hier dem Weicheisenelement 8.22, über, um von dort den Luftspalt L zu passieren und in das Statorelement 5.2 einzutreten. Über dieses wird er um die Wicklung 6 herumgeführt und kommt auf der anderen Läuferseite zurück, geht dort getrieben durch die Magnetanordnungen 7.11 und 7.12 eine Polteilung in Längsrichtung, durchsetzt wieder den Luftspalt L, umschließt mit Hilfe des Statorelementes 5.3 die Wicklung 6 und schließt so die Flußbahn im Weicheisenelement 8.32..

Bezüglich des Grundprinzips der Krafterzeugung und der Realisierung der Bewegung des Sekundärteiles 3 gegenüber dem Primärteil 2 kann auf die grundlegenden Ausführungen zur Transversalflußtechnik in den Druckschriften
1) DE 39 27 453 A1
2) WO 88/06375
verwiesen werden. Der Offenbarungsgehalt dieser Druckschriften bezüglich der Grundlagen der Transversalflußtechnik wird vollumfänglich mit aufgenommen.

Die Figur 1b verdeutlicht eine Ansicht A-B entsprechend der Figur 1a. Daraus wird ersichtlich, daß die Statorelemente 5.2 und 5.3 jeweils ober- bzw. unterhalb der Wicklung 6 in Einbaulage angeordnet sind. Die den Primärteil 3 bildenden Läuferteile 15 bzw. 16 mit den Anordnungen aus Magnetelementen 7.1 bis 7.n und dazwischen angeordneten Weicheisenelementen 8.1 bis 8.n sind dem Primärteil 2 derart zugeordnet, daß diese an den von den Statorelementen 5 freien Seiten der Wicklung 6 angeordnet sind. In Einbaulage sind die Läuferteile 15 und 16 des Sekundärteiles 3 dabei im dargestellten Beispiel jeweils links und rechts der Wicklung 6 angeordnet.

Die Einbaulage kann variieren. Jede Lage ist denkbar, d.h. auch eine Anordnung in senkrechter Richtung, d.h. mit in senkrechter Richtung nebeneinander angeordneten Statorelementen.

Die Wicklung 6 besteht vorzugsweise aus einem in Bewegungsrichtung verlaufenden isolierten Kupferstrang. Die Statorelemente 5, welche schwellenartig, zueinander versetzt und abwechselnd unter und über dem Kupferstrang angeordnet sind, sind vorzugsweise als Blechpakete ausgeführt. Die in Bewegungsrichtung verlaufende Wicklung sowie die zueinander versetzt und abwechselnd über und unter dem Kupferstrang angeordneten Blechpakete bilden den sogenannten Fahrweg. Die Statorelemente 5, insbesondere die Blechpakete, werden z.B. mittels Verbindungselementen, insbesondere Bolzen, an einem Fahrwegträger befestigt, während die als Kupferstrang ausgeführte Wicklung durch die Anordnung der Statorelemente 5, insbesondere der Blechpakete, niedergehalten wird. Selbstverständlich sind zur Befestigung noch weitere Elemente notwendig, welche jedoch im Bereich des Fachwissens des zuständigen Fachmannes auf diesem Gebiet liegen.

Aus der Figur 1b ist ersichtlich, daß die Statorelemente 5 einen einfachen Aufbau aufweisen. Diese sind im einfachsten Fall mit einem rechteckigenoder quadratischen Querschnitt ausgeführt. Die einzelnen Statorelemente 5 sind somit einfach herzustellen, nämlich aus einer Vielzahl hintereinander aufgeschichteter Blechelemente. Dieser einfache Aufbau ermöglicht es, die Kosten für den gegenüber dem anzutreibenen Element für ein verhältnismäßig langen Fahrweg, gering zu halten. Dem gegenüber wird aus Figur 1b ersichtlich, daß zur Leitung des magnetischen Flusses die Weicheisenelemente 8 des Sekundärteiles dafür einen komlizierter ausgeführten Querschnitt aufweisen. Die Weicheisenelement 8, hier die Weicheisenelemente 8.3.1 und 8.3.2 sind dabei u-förmig ausgeführt, wobei die beiden Schenkel jedes u-förmig gestalteten Weicheisenelementes 8 zueinander gerichtet sind, und sich zu den Statorelementen 5 hin erstrecken. Diese etwas kompliziertere Ausführung der Weicheisenelemente in Form von Schnittbandkemen ist jedoch gegenüber dem Fahrweg nur für eine sehr begrenzte Anzahl von Elementen gegenüber einer wesentlich höheren Anzahl von Statorelementen erforderlich.

Die Figur 1c verdeutlicht eine Ansicht von rechts auf ein erfindungsgemäß ausgeführtes Antriebsmittel für kontinuierliche Linearbewegung, insbesondere eine Linear-Langstator-Transversalflußmaschine. In dieser Ansicht auf das Läuferteil 15 ist die Wicklung 6 in Einbaulage dargestellt, wobei oberhalb und unterhalb Statorelemente, hier das Statorelement 5.1 und 5.2, angeordnet sind. Diese Elemente bilden den Fahrweg. Des weiteren ist das Sekundärteil 3 dargestellt, welches vorzugsweise an der zu bewegenden Einheit, beispielsweise einem Aufzug, insbesondere einem Lastraum oder aber einem Schienenfahrzeug, beispielsweise einer Bahn, angeordnet ist. Daraus ist ersichtlich, daß zwischen den Weicheisenelementen 8 wechselweise magnetisierte Magnetelemente 7, hier 7.1 und 7.2, angeordnet sind. Die Weicheisenelemente 8 sind dabei derart ausgeführt, daß diese die Statorelemente 5 überdecken können.

Es ist nicht zwingend erforderlich, daß die Abmessungen in axialer Richtung der Weicheisenelemente 8 des Sekundärteiles 3 und der Statorelemente 5 des Primärteiles 2 identisch sein müssen. Vorzugsweise wird jedoch eine derartige Anordnung angestrebt

Die Figur 2 verdeutlicht die Ausführung eines Fahrweges als Fahrwegschleife. Der Fahrweg, welcher im wesentlichen durch die Wicklung 6 beschrieben wird, liegt hier als einphasige Fahrwegschleife mit Hin- und Rückleiter vor. Diese sind hier jeweils mit 10 und 11 bezeichnet. In der Figur 2 ist lediglich der Fahrweg ohne Fahrzeug bzw. zu bewegendes Element dargestellt.

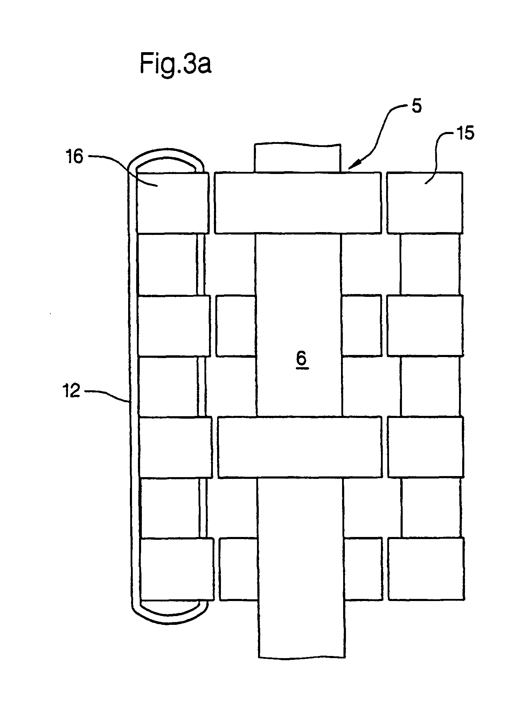

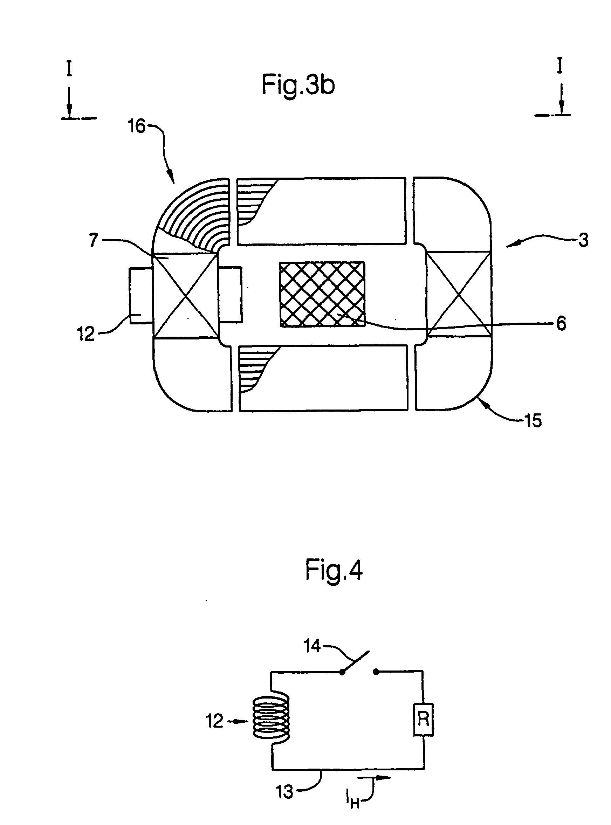

Zur Realisierung einer elektrischen Bremsung bei Umrichter- oder Stromausfall ist das erfindungsgemäße Antriebsmittel, das als Linear-Langstator-Transversalflußmaschine 1 ausgeführt ist, mit einer Einrichtung zur Erzeugung einer Bremsreaktionskraft F_{brems} zugeordnet. Diese Einrichtung, welche hier mit 12 bezeichnet ist, ist in Form einer Brems- bzw. Hilfswicklung, welche wenigstens ein Magnetelement 7 umfaßt, einem der beiden Läufer 15 oder 16 des Sekundärteils 3 zugeordnet. In der Figur 3b ist dazu eine Ansicht entsprechend Figur 1b mit einem Ausführungsbeispiel der Hilfswicklung dargestellt. für gleiche Elemente werden gleiche Bezugszeichen verwendet. Die Figur 3a zeigt Form und Lage der Hilfswicklung in einer weiteren Ansicht I-I. Die Hilfswicklung 12 erstreckt sich im dargestellten Falle über die gesamte Läuferlänge. Denkbar ist es jedoch auch, diese bei geeigneter Führung der Wicklung lediglich über einen Teil der gesamten Läuferlänge, hier des Läufers 16 zu erstrecken. Eine weitere, hier im Einzelnen nicht dargestellte Möglichkeit besteht darin, wenigstens einem Läuferteil, hier dem Läuferteil 16 mehrere einzelnen Hilswicklungen zuzuordnen, welche sich jeweils über einen Teil der axialen Ausdehnung des Läufers erstrecken.

Nach Figur 4 ist die Hilfswicklung 12 in einem Stromkreis 13 mit dem Schalterelement 14 und einem Widerstand R in Reihe geschaltet. In geschlossenem Zustand ermöglicht das Schaltelement 14 den Stromfluß I_{H} durch den Widerstand R.

Im normalen Betrieb, d.h. bei Bewegung der anzutreibenden Einheit, bspw. des Lastraumes eines Aufzuges, eines Schienenfahrzeuges etc, ist der Stromkreis 13 durch das Schaltelement 14 unterbrochen. Somit ist kein Stromfluß durch die Hilfswicklung möglich. Im Betriebszustand "Bremsen" wird das Schaltelement 14 geschlossen und es fließt durch die Hilfswicklung 12 ein Strom I_{H}. Über diesen Strom wird im Widerstand R die Bremsenergie in Wärme umgesetzt. Da keine Erregerleistung erforderlich ist, kann die Bremskraft (bei bewegtem Fahrzeug) auch bei völligem Stromausfall erbracht werden.

In den Figuren wurde lediglich eine einphasige erfindungsgemäße Langstator-Transversalflußmaschine dargestellt. Es besteht theoretisch auch die Möglichkeit, wie bereits im Vorfeld erläutert, mehrere derartige Maschinen miteinander zu kombinieren um auch ein eindeutiges und kontinuierliches Anfahren aus dem Stillstand zu ermöglichen.

## Patentansprüche

1. Antriebsmittel für Linearbewegungen, insbesondere für kontinuierliche Linearbewegungen, insbesondere Langstator-Linearmotor
1.1 mit einem Primärteil (2), umfassend einen Stator (4);
1.2 mit einem Sekundärteil (3), umfassend zwei Läuferteile (15, 16) mit wechselweise magnetisierten hintereinander angeordneten Magnetanordnungen (7.1-7.n) und dazwischen angeordneten Weicheisenelementen (8.1-8.n); **gekennzeichnet durch** die folgenden Merkmale:
1.3 dem Stator (4) ist wenigstens eine geschlossene Wicklung (6) zugeordnet, die sich im wesentlichen über die gesamte Länge des Fahrweges erstreckt;
1.4 der Stator (4) umfaßt eine Vielzahl von Statorelementen (5.1-5.n), welche wechselweise beidseitig der Wicklung (6) zueinander versetzt angeordnet sind;
1.5 die beiden Läuferteile (15,16) des Sekundärteils (3) sind der Wicklung (6) an den vom Stator (4) freien Seiten der Wicklung (6) jeweils in einem bestimmten Abstand zu dieser zugeordnet, wobei jeweils einander entgegengesetzt magnetisierte Magnetanordnungen (7.1-7.n) der beiden Läuferteile (15,16) sich wenigstens zum Teil einander gegenüberliegen.

2. Antriebsmittel nach Anspruch 1, **dadurch gekennzeichnet, daß** die Statorelemente (5.1-5.n) im Schnitt einen im wesentlichen rechteckigen Querschnitt aufweisen.

3. Antriebsmittel nach einem der Ansprüche 1 oder 2, **dadurch gekennzeichnet, daß** die Statorelemente (5.1-5.n) als Blechpakete aus hintereinandergeschichteten Blechelementen ausgeführt sind.

4. Antriebsmittel nach einem der Anspruche 2 oder 3, **dadurch gekennzeichnet, daß** die Weicheisenelemente (8.1-8.n) der Läuferteile (15, 16) des Sekundärteiles (3) im Schnitt einen u-förmigen Querschnitt aufweisen, wobei die einzelnen Schenkel der Weicheisenelemente (8.1-8.n) eines Läuferteiles zu den Schenkeln der Weicheisenelemente (8.1 -8.n) des anderen gegenüberliegenden Läuferteiles gerichtet sind und sich bei Projizierung von Statorelement und Weicheisenelement in eine Ebene zum Statorelement hin erstrecken.

5. Antriebsmittel für Linearbewegung nach einem der Ansprüche 1 - 4, **dadurch gekennzeichnet, daß** die Statorelemente (5.1 - 5.n) und die Läuferteile (15,16) in einem Schnitt senkrecht zur Wicklung (6) betrachtet derart angeordnet sind, daß diese im wesentlichen die Form eines Rechteckes beschreiben.

6. Antriebsmittel für Linearbewegung nach einem der Ansprüche 1 bis 5, **dadurch gekennzeichnet, daß** in Einbaulage die Statorelemente (5.1-5.n) oberund unterhalb der Wicklung (6) angeordnet sind.

7. Antriebsmittel für Linearbewegung nach einem der Ansprüche 1 bis 5, **dadurch gekennzeichnet, daß** in Einbaulage die Statorelemente (5.1-5.n) rechts und links der Wicklung (6) angeordnet sind.

8. Antriebsmittel für Linearbewegung nach einem der Ansprüche 1 bis 7, **dadurch gekennzeichnet, daß** die beiden Läuferteile (15,16) derart angeordnet sind, daß die jeweils einander entgegengesetzt magnetisierten Magnetanordnungen (7.1-7.n) sich genau gegenüberliegen.

9. Antriebsmittel für Linearbewegung nach einem der Ansprüche 1 bis 8, **dadurch gekennzeichnet, daß** der Primärteil (2) eine Fahrwegsschleife bildet, umfassend einen Hin- und Rückleiter (10,11).

10. Antriebsmittel für Linearbewegung nach einem der Ansprüche 1 bis 8, **gekennzeichnet durch** folgende Merkmale:
10.1 wenigstens einer Magnetanordnung (7) wenigstens eines Läuferteiles (15 oder 16) ist eine Hilfswicklung (12) zugeordnet;
10.2 die Hilfswicklung (12) ist mit einem Stromkreis (13) koppelbar;
10.3 der Stromkreis (13) umfaßt wenigstens ein elektrisches Widerstandselement (R).

11. Antriebsmittel für Linearbewegung nach Anspruch 10, **dadurch gekennzeichnet, daß** die Hilfswicklung (12) sich über die gesamte Länge eines Läuferteiles erstreckt.

12. Antriebsmittel für Linearbewegung nach einem der Ansprüche 1 - 11, **dadurch gekennzeichnet, daß** dieses ein weiteres Primärteil und ein weiteres Sekundärteil umfaßt.

13. Verwendung eines Antriebsmittels nach einem der Ansprüche 1 bis 12 für den Antrieb eines Fahrkorbes in einem Aufzug.

14. Verwendung eines Antriebsmittels nach einem der Ansprüche 1 bis 12 in einem Schienenfahrzeug.

## Claims

1. Drive means for linear movements, in particular for continuous linear movements, in particular long stator linear motor
1.1 with a primary component (2) comprising a stator (4);
1.2 with a secondary component (3) comprising two rotor components (15, 16) with alternately magnetised arrangements of magnets (7.1 to 7.n) arranged one behind the other and soft iron elements (8.1 to 8.n) arranged therebetween;
**characterised by** the following features:
1.3 at least one closed winding (6) is associated with the stator (4) and extends substantially over the entire length of the travel path;
1.4 the stator comprises a plurality of stator elements (5.1 to 5.n) alternately mutually offset on either side of the winding (6);
1.5 the two rotor components (15, 16) of the secondary component (3) are associated with the winding (6) at the side of the winding (6) free from the stator (4) at a specific distance from the former respectively, mutually opposed magnetised arrangements of magnets (7.1 to 7.n) of the two rotor components (15, 16) each at least partially opposing one another.

2. Drive means according to claim 1, **characterised in that** the stator elements (5.1 to 5.n) have a substantially rectangular cross-section in section.

3. Drive means according to either of claims 1 or 2, **characterised in that** the stator elements (5.1 to 5.n) are designed as laminated cores consisting of laminations laminated one behind the other.

4. Drive means according to either of claims 2 or 3, **characterised in that** the soft iron elements (8.1 to 8.n) of the rotor components (15, 16) of the secondary component (3) have a U-shaped cross-section in section, the individual legs of the soft iron elements (8.1 to 8.n) of a rotor component being directed toward the legs of the soft iron elements (8.1 to 8.n) of the other opposing rotor component and extending into a plane toward the stator element when stator element and soft iron element project.

5. Drive means for linear movement according to any of claims 1 to 4, **characterised in that**, viewed in a section perpendicular to the winding (6), the stator elements (5.1 to 5.n) and the rotor components (15, 16) are arranged such that they substantially describe the shape of a rectangle.

6. Drive means for linear movement according to any of claims 1 to 5, **characterised in that** the stator elements (5.1 to 5.n) are arranged above and below the winding (6) when installed.

7. Drive means for linear movement according to any of claims 1 to 5, **characterised in that** the stator elements (5.1 to 5.n) are arranged to the right and left of the winding (6) when installed.

8. Drive means for linear movement according to any of claims 1 to 7, **characterised in that** the two rotor components (15, 16) are arranged in such a way that the magnetised arrangements of magnets (7.1 to 7.n) each mutually opposed are located exactly opposite one another.

9. Drive means for linear movement according to any of claims 1 to 8, **characterised in that** the primary component (2) forms a travel path loop comprising a forward line and a return line (10, 11).

10. Drive means for linear movement according to any of claims 1 to 8, **characterised by** the following features:
10.1 one auxiliary winding (12) is associated with at least one arrangement of magnets (7) of at least one rotor component (15 or 16);
10.2 the auxiliary winding (12) can be coupled to an electric circuit (13);
10.3 the electric circuit (13) comprises at least one electric resistor (R).

11. Drive means for linear movement according to claim 10, **characterised in that** the auxiliary winding (12) extends over the entire length of a rotor component.

12. Drive means for linear movement according to any of claims 1 to 11, **characterised in that** it comprises a further primary component and a further secondary component.

13. Use of a drive means according to any of claims 1 to 12 for driving a cage in a lift.

14. Use of a drive means according to any of claims 1 to 12 in a rail vehicle.

## Revendications

1. Moyen d'entraînement pour des déplacements linéaires, notamment pour des déplacements linéaires continus, en particulier moteur linéaire à stator long, comprenant
- une partie primaire (2), ayant un stator (4),
- une partie secondaire (3), ayant deux parties d'induit (15, 16) avec des systèmes d'aimants magnétisés (7.1 à 7.n) disposés les uns derrière les autres avec, intercalés entre eux, des éléments en fer doux (8.1 à 8.n),
**caractérisé en ce que**
- au stator (4) est associé au moins un enroulement fermé (6) s'étendant essentiellement sur toute la longueur de la piste de circulation,
- le stator (4) comprend un grand nombre d'éléments du stator (5.1 à 5.n) disposés alternativement de part et d'autre de l'enroulement (6), et décalés entre eux, et
- les deux parties d'induit (15, 16) de la partie secondaire (3) sont associées à l'enroulement (6) le long chacune d'un côté de celui-ci dépourvu de stator (4) et à une certaine distance de cet enroulement, (6) les systèmes d'aimants (7.1 à 7.n), magnétisés en oppositions des deux parties d'induit (15, 16), étant au moins en partie disposés en face les uns des autres.

2. Moyen d'entraînement selon la revendication 1,
**caractérisé en ce que**
les éléments du stator (5.1 à 5.n) présentent en coupe transversale, une section essentiellement rectangulaire.

3. Moyen d'entraînement selon la revendication 1 ou 2,
**caractérisé en ce que**
les éléments du stator (5.1 à 5.n) sont des paquets de tôle constitués d'éléments en tôle formant des couches disposées les unes derrière les autres.

4. Moyen d'entraînement selon la revendication 2 ou 3,
**caractérisé en ce que**
les éléments en fer doux (8.1 à 8.n) des parties d'induit (15, 16) de la partie secondaire (3) présentent en coupe transversale une section ayant la forme d'un U, les branches de l'U des éléments (8.1 à 8.n) en fer doux d'une partie d'induit étant dirigées vers les branches de l'élément en fer doux (8.1 à 8.n) de l'autre partie d'induit et s'étendant, si on projette l'élément du stator et l'élément de fer doux sur un plan, en direction de l'élément du stator.

5. Moyen d'entraînement selon l'une des revendications 1 à 4,
**caractérisé en ce que**
les éléments du stator (5.1 à 5.n) et les parties d'induit (15, 16) observés en coupe perpendiculaire à l'enroulement (6), sont disposés de manière à présenter sensiblement la forme d'un rectangle.

6. Moyen d'entraînement selon l'une des revendications 1 à 5,
**caractérisé en ce qu'**
en position de montage, les éléments du stator (5.1 à 5.n) sont disposés au dessus et en dessous de l'enroulement (6).

7. Moyen d'entraînement selon l'une des revendications 1 à 5,
**caractérisé en ce qu'**
en position de montage, les éléments du stator (5.1 à 5.n) sont disposés à gauche et à droite de l'enroulement (6).

8. Moyen d'entraînement selon l'une des revendications 1 à 7,
**caractérisé en ce que**
les deux parties d'induit (15, 16) sont disposées de manière que chaque fois deux systèmes d'aimants (7.1 à 7.n) magnétisés en opposition se font face précisément.

9. Moyen d'entraînement selon l'une des revendications 1 à 8,
**caractérisé en ce que**
la partie primaire (2) forme une boucle de circulation, comprenant une voie aller et une voie retour (10, 11).

10. Moyen d'entraînement selon l'une des revendications 1 à 8,
**caractérisé en ce que**
- à un système d'aimants (7) d'au moins une partie d'induit (15 ou 16) est associé un enroulement auxiliaire (12),
- cet enroulement auxiliaire (12) peut être couplé à un circuit de courant (13), et
- le circuit de courant (13) comprend au moins un élément ( R ) de résistance électrique.

11. Moyen d'entraînement selon la revendication 10,
**caractérisé en ce que**
l'enroulement auxiliaire (12) s'étend sur toute la longueur d'une partie d'induit.

12. Moyen d'entraînement selon l'une des revendications 1 à 11,
**caractérisé en ce qu'**
il comprend une autre partie primaire et une autre partie secondaire.

13. Utilisation d'un moyen d'entraînement selon l'une des revendications 1 à 12,
pour entraîner une cabine d'ascenseur.

14. Utilisation d'un moyen d'entraînement selon l'une des revendications 1 à 12,
dans un véhicule sur rails.
